# EUROPÄISCHE PATENTSCHRIFT

(11) **EP 2 549 128 B1**
(45) Veröffentlichungstag und Bekanntmachung des Hinweises auf die Patenterteilung: **14.05.2014**
(21) Anmeldenummer: 12176344.5
(22) Anmeldetag: 13.07.2012
(51) Int. Cl.: F16B 37/06, F16B 17/00, F16B 39/282

(54) **Funktionselement mit Verdrehsicherungsmerkmalen sowie Zusammenbauteil bestehend aus dem Funktionselement und einem Blechteil**
Functional element with anti-twist properties and assembly component comprising the functional element and a sheet metal section
Elément fonctionnel avec propriétés de sécurisation contre la torsion et composant composé d'un élément fonctionnel et d'une partie en tôle

(30) Priorität: 21.07.2011 DE 102011108224
(43) Veröffentlichungstag der Anmeldung: 23.01.2013
(73) Patentinhaber: Profil Verbindungstechnik GmbH & Co. KG, 61381 Friedrichsdorf (DE)
(72) Erfinder: Babej, Jiri, 35423 Lich (DE)
(74) Vertreter: Manitz, Finsterwald & Partner GbR

(56) Entgegenhaltungen:
- EP-A1- 1 674 741
- EP-A1- 2 141 370
- EP-A2- 0 842 733
- DE-A1- 2 556 985
- DE-A1- 3 641 836
- US-A- 3 213 914
- US-A- 4 380 414
- US-B1- 6 318 940

## Beschreibung

Die vorliegende Erfindung betrifft ein Funktionselement mit Verdrehsicherungsmerkmalen entsprechend dem Oberbegriff des Anspruchs 1 bzw. ein Zusammenbauteil bestehend aus dem Funktionselement und einem Blechteil.

Ein Funktionselement sowie ein Zusammenbauteil dieser Art sind aus der EP-A-1674741 bekannt. Dort wird ein durch Nieten an ein Blechteil anbringbares Element, insbesondere ein Element in Form eines Zentrierbolzens beansprucht. Das Element ist mit einem Schafteil und einem Kopfteil versehen, wobei der Kopfteil auf seiner dem Blechteil zugewandten Seite eine zumindest in etwa ringförmige Ringvertiefung aufweist, die auf der radial inneren Seite vorzugsweise in einen Zylinderabschnitt des Kopfteils übergeht, der wiederum in den Schaftteil und einen rohrförmigen Nietabschnitt übergeht. Der rohrförmige Nietabschnitt umgibt den Schaftteil im Bereich des Kopfteils, ist innerhalb einer radial außerhalb der Ringvertiefung angeordneten ringförmigen Auflagefläche angeordnet und geht auf der radial äußeren Seite über eine zumindest in etwa konusförmige Wand in die ringförmige Auflagefläche über.

Zur Verdrehsicherung sind mehrere, insbesondere gleichmäßig verteilte lokale Vertiefungen in der konusförmigen Wand der Ringvertiefung und/oder in einer wahlweise vorhandenen ringförmigen Bodenfläche (26) der Ringvertiefung vorgesehen.

Das Element ist insbesondere zur Anwendung mit dicken Blechteilen gedacht. Auch andere Elemente sind bekannt, bei denen Vertiefungen in einer Blechanlagefläche zum Erzielen einer Verdrehsicherung vorgesehen sind. In der Praxis wird das Funktionselement in einer Presse oder durch Anwendung eines Roboters oder einer kraftbetätigten Zange gegen ein Blechteil gepresst, wobei die Presse, der Roboter oder die Zange eine axiale Kraft auf den Kopfteil des Funktionselements auf der einen Seite des Blechteils sowie auf eine Matrize auf der anderen Seite des Blechteils ausüben, um das Funktionselement durch Umbördelung des Nietabschnitts mit dem Blechteil zu vernieten. Auch sind Funktionselemente in der Form von Einpresselementen bekannt, bei denen das Funktionselement nicht oder zumindest im Wesentlichen nicht absichtlich durch die Presse, den Roboter oder die Zange verformt wird, sondern das Blechmaterial wird beim Einpressen des Elements gezwungen, in eine Hinterschneidung des Funktionselements hineinzufließen.

An dieser Stelle soll zum Ausdruck gebracht werden, dass die vorliegende Erfindung mit einer breiten Palette von Funktionselementen wie Nietelementen, Stanz- und Nietelementen, Einpresselementen und Einstanzelementen verwendet werden kann, wobei die Funktionselemente mit einem Innengewinde und/oder mit einem Außengewinde versehen werden können, d.h. als Mutterelemente oder Bolzenelemente ausgebildet sein können, oder als Lagerzapfen für eine Lagerbuchse oder als Hohllager für eine Welle ausgebildet sein können. Andererseits können die Funktionselemente auch als Clip realisiert werden.

Egal welcher Zweck vorgesehen ist, stellt es sich als einigermaßen schwierig heraus, das Blechmaterial mittels einer Matrize so zu verformen, dass Blechmaterial in die Vertiefungen hineinfließt und die notwendige Verdrehsicherung zwischen dem Funktionselement und dem Blechteil erzeugt.

Die Problematik ist bei dicken Blechteilen besonders akut (aber auch bei dünneren Blechteilen und höherfesten Blechteilen relevant), da es nicht leicht ist, das Blechmaterial mittels der Matrize so zum Fließen zu bringen, dass es die Vertiefungen vollständig oder ausreichend füllt, um hierdurch die erwünschte Verdrehsicherung zu erreichen.

In umgekehrter Weise ist es manchmal schwierig, Verdrehsicherungserhöhungen wie Verdrehsicherungsrippen an der Blechanlagefläche ausreichend in das Blechmaterial hineinzudrücken und hierdurch die erwünschte Verdrehsicherung zu erreichen.

Aufgabe der vorliegenden Erfindung ist es hier Abhilfe zu schaffen.

Um diese Aufgabe zu lösen, wird erfindungsgemäß vorgesehen, dass die Spitze der Erhöhung gerundet ist, dass die Blechanlagefläche im Bereich des Verdrehsicherungsmerkmals und um dieses herum in einer lokalen Ebene liegt oder eine entsprechende Ebene bestimmt, und dass das Volumen der Erhöhung auf einer Seite dieser lokalen Ebene zumindest im Wesentlichen dem Volumen der Vertiefung auf der anderen Seite dieser Ebene entspricht.

Dadurch, dass eine lokale Erhöhung und eine lokale Vertiefung unmittelbar zueinander benachbart angeordnet sind, muss die lokale Erhöhung das Blechmaterial nur über einen kurzen Weg verdrängen, um es in die lokale Vertiefung zu bringen, und dies gelingt recht einfach und mit mäßigen Kräften auch dann, wenn mit dicken Blechteile von mehreren mm Dicke oder mit höherfesten oder mit hochfesten Blechen mit Festigkeiten oberhalb von 300 MPa bzw. 1400 MPa gearbeitet wird. Ein Grund hierfür dürfte darin liegen, dass die aufgebrachte Presskraft zu einer hohen lokalen Spannung führt, die der Blechverdrängung in die unmittelbar benachbart liegende Vertiefung erleichtert.

Wird dagegen nur mit lokalen Verdrehsicherungserhöhungen gearbeitet, muss das verdrängte Material in einem umliegenden Volumen aus massivem im Prinzip nicht kompressiblen Material verteilt werden. Wird nur mit lokalen Verdrehsicherungsvertiefungen gearbeitet, so muss Material aus einem großen Volumen von Blechmaterial in die Vertiefungen verdrängt werden, was ebenfalls relativ hohe Kräfte erfordert.

Besonders günstig ist es, dass die Blechanlagefläche im Bereich des Verdrehsicherungsmerkmals und um dieses herum in einer lokalen Ebene liegt oder eine entsprechende Ebene bestimmt, und dass das Volumen der Erhöhung oberhalb dieser lokalen Ebene zumindest im Wesentlichen dem Volumen der Vertiefung unterhalb dieser Ebene entspricht. Diese lokale Ebene kann im Falle einer Erhöhung, die mittig in einer Vertiefung liegt, als die Ebene verstanden werden, die durch die äußere Begrenzung der Vertiefung bestimmt ist. Allerdings kann es durchaus sein, dass die Vertiefung mindestens teilweise in einer gerundeten Fläche, beispielsweise in einer konusförmigen Fläche, vorliegt, wodurch die Umrandung aufgrund der Krümmung der Fläche oder einer etwaigen Abwinkelung der Fläche und der Ausdehnung der Umrandung nicht wirklich in einer Ebene liegt. In einem solchen Fall kann man aber eine Art mittlere Ebene definieren, die für die Betrachtung der Volumina herangezogen werden kann.

Hierdurch kann sichergestellt werden, dass das Blechmaterial, das durch die Verdrehsicherungserhöhung lokal verdrängt wird, auch vollständig in die unmittelbar benachbarte Verdrehsicherungsvertiefung aufgenommen wird, wodurch der erwünschte formschlüssige Eingriff zwischen den Verdrehsicherungsmerkmalen und dem Blechteil maximiert wird und daher eine gute Verdrehsicherheit zustande kommt.

Dabei ist die Spitze der Erhöhung gerundet. Hierdurch wird sichergestellt, dass keine unerwünschte Kerbwirkung entsteht, die für die Ermüdungsdauer des Zusammenbauteils abträglich wäre. Aus dem gleichen Grund ist es bevorzugt, wenn die Umrandung der Vertiefung gerundet ist. Hier ist aber die Kerbwirkung nicht so kritisch, da das Blechteil an dieser Stelle zumindest im Wesentlichen die ursprüngliche Dicke aufweist, so dass die genannte Umrandung auch scharfkantig ausgeführt werden kann.

An dieser Stelle soll auf die US-B-6,318,940 verwiesen werden. Diese Schrift zeigt ebenfalls ein Funktionselement entsprechend dem Oberbegriff des Anspruchs 1. Dort sind scharfkantig ausgebildete Verdrehsicherungsmerkmale vorgesehen, die ausweislich der dortigen Zusammenfassung jeweils aus einer messerartigen Kante mit einem Schlitz auf jeder Seite besteht. Ferner ist die konkrete Ausbildung deshalb nachteilig, weil die messerartige Ausbildung der Kante, die nicht von einer Vertiefung an ihrem radial äußeren Ende umgeben ist, zu einer wesentlichen lokalen Verdünnung des Blechteils führt, die mit einer erheblichen Kerbwirkung einhergeht, wodurch die Verbindung zwischen dem Blechteil und dem Element eher von Ermüdungserscheinungen betroffen ist.

Ferner soll auf die EP-A-0842733 verwiesen werden. Zwar weist das dort gezeigte Element mehrere Verdrehsicherungsmerkmale auf. Allerdings ist dort kein Schaftteil vorgesehen und keine Blechanlagefläche, die einen Schaftteil umgibt, geschweige denn Verdrehsicherungsmerkmale auf einer einen Schaftteil umgebenden Blechanlagefläche, die durch eine Vertiefung mit einer mittigen Erhöhung gebildet sind.

Das erfindungsgemäße Funktionselement kann einen Nietabschnitt aufweisen, der den formschlüssigen Eingriff jedes Verdrehsicherungsmerkmals des Funktionselements mit dem Blechteil sichert.

Alternativ hierzu kann das Funktionselement ein Einpresselement mit einer Blechmaterial aufnehmenden Hinterschneidung sein, die ebenfalls den formschlüssigen Eingriff jedes Verdrehsicherungsmerkmals des Funktionselements im Blechteil sichert.

Ferner befasst sich die vorliegende Erfindung mit einem Zusammenbauteil bestehend aus einem ober erläuterten Funktionselement und einem Blechteil, wobei das Blechmaterial benachbart zur Blechanlagefläche an der Stelle jeder Erhöhung eines Verdrehsicherungsmerkmals eine Materialvertiefung und an der Stelle jeder Vertiefung eine Materialerhöhung aufweist, wodurch ein die Verdrehsicherung bewirkender formschlüssiger Eingriff zwischen dem Material des Blechteils und dem Funktionselement besteht.

Wenn es sich bei dem Funktionselement um ein Nietelement mit einem Nietabschnitt handelt, so klemmt der Nietabschnitt nach der Umbördelung das Blechmaterial zwischen sich und der Blechanlagefläche, wodurch ein qualitativ hochwertiges Zusammenbauteil entsteht, das eine gute Verdrehsicherung aufweist.

Wenn es sich bei dem Funktionselement um ein Einpresselement handelt und das Blechmaterial die Hinterschneidung zuminsdest teilweise aufnimmt, verhindert dies eine axiale Trennung des Funktionselements und des Blechteils. Hierdurch wird der formschlüssige Eingriff zwischen der Erhöhung des Verdrehsicherungsmerkmals des Funktionselements und der Materialvertiefung des Blechteils sowie zwischen der Vertiefung des Funktionselements und der Materialerhöhung des Blechteils aufrechterhalten.

Die Erfindung wird nachfolgend rein beispielhaft anhand eines Ausführungsbeispiels und der Figuren näher erläutert, in denen zeigen:
- Fig. 1A: eine Draufsicht auf die Blechanlagefläche eines erfindungsgemäßen Funktionselements in der Form eines Gewindebolzens,
- Fig. 1B: eine teilweise in Längsrichtung geschnittene Ansicht des Gewindebolzens der Fig. 1A,
- Fig. 1C: eine vergrößerte Darstellung des eingekreisten Bereiches der Darstellung gemäß Fig. 1B,
- Fig. 1D: eine perspektivische Darstellung des Gewindebolzens der Fig. 1A bis 1C,
- Fig.2A-2C: Darstellungen, um den Einbau des Gewindebolzens gemäß Fig. 1A bis 1D in ein Blechteil zur Erzeugung eines erfindungsgemäßen Zusammenbauteils zu erläutern,
- Fig. 3A: ein nicht erfindungsgemäßes Funktionselement in der Form eines Mutterelements mit einer alternativen Form der Verdrehsicherungsmerkmale,
- Fig. 3B: eine vergrößerte Darstellung eines Verdrehsicherungsmerkmals entsprechend der Fig. 3A in Draufsicht von unten gesehen und
- Fig. 3C: eine vergrößerte Darstellung eines Verdrehsicherungsmerkmals gemäß Fig. 3A in einer radialen Schnittebene (radial zur Längsachse des Elements) gesehen.

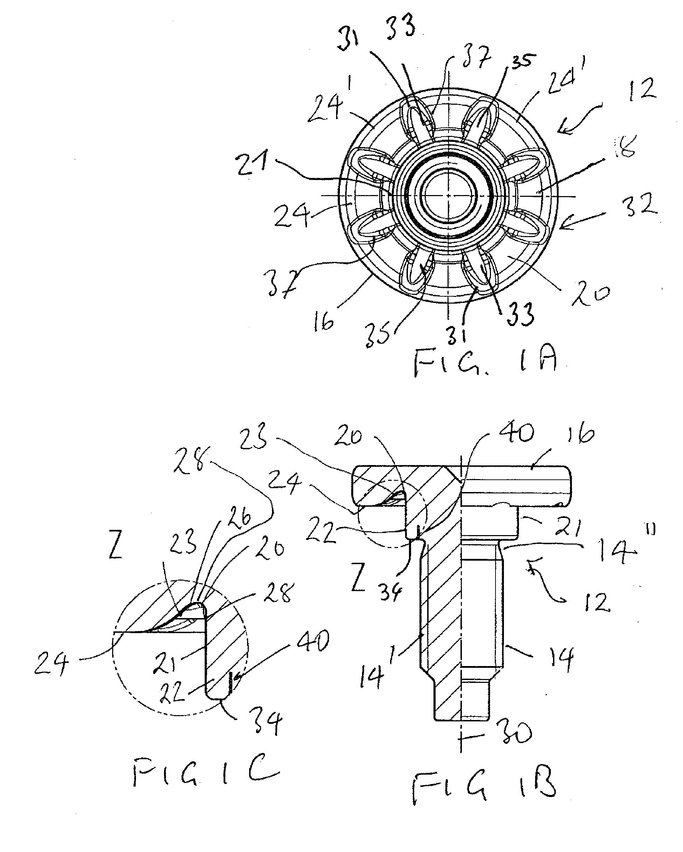

Das Funktionselement 12 der Figuren 1A bis 1D entspricht weitestgehend dem Funktionselement der EP-B-1674741, außer dass die Verdrehsicherungsmerkmale, die allgemein mit dem Bezugszeichen 32 gekennzeichnet sind, anders ausgebildet sind.

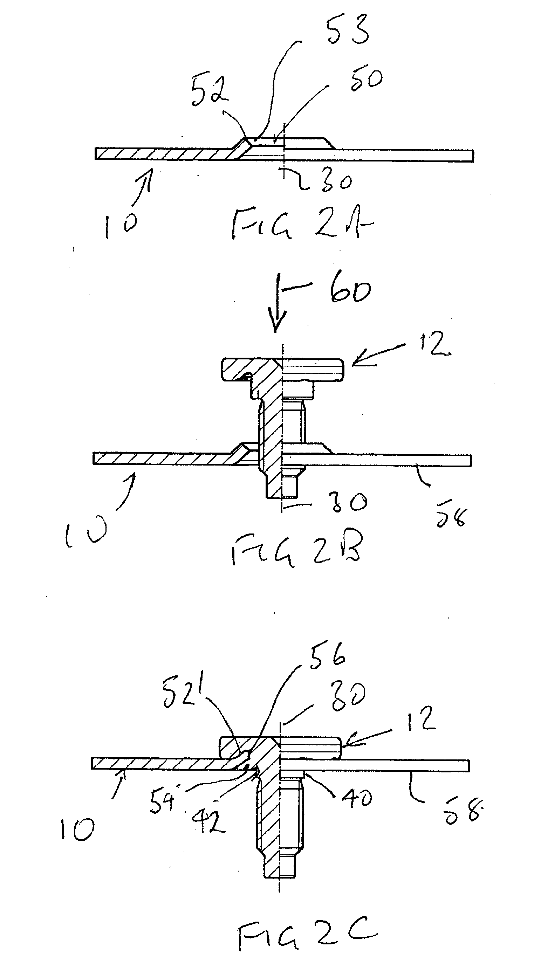

Bezug nehmend auf die Fig. 1A bis 1D und Fig. 2A bis 2C wird ein durch Nieten an ein Blechteil 10 (Fig. 2A bis 2C) anbringbares Element 12 in Form eines Zentrierbolzens mit einem Schaftteil 14 und einem Kopfteil 16 gezeigt, wobei der Kopfteil 16 auf seiner dem Blechteil 10 zugewandten Seite 18 eine zumindest in etwa ringförmige Ringvertiefung 20 aufweist, die auf der radial inneren Seite in einen Zylinderabschnitt 21 des Kopfteils 16 übergeht, der wiederum in den Schaftteil 14 und einen rohrförmigen Nietabschnitt 22 übergeht, der den Schaftteil 14 im Bereich des Kopfteils 16 bzw. unmittelbar unterhalb des Kopfteils 16 umgibt. Die Ringvertiefung 20, die eine Blechanlagefläche bildet, ist innerhalb einer weiteren radial außerhalb der Ringvertiefung 20 angeordneten ringförmigen Anlagefläche 24 bzw. eine aus Kreisringsegmenten 24' bestehende Anlagefläche angeordnet und geht auf der radial äußeren Seite über eine zumindest in etwa konusförmige Wand 23 in die Auflagefläche 24 bzw. 24' über. Die konusförmige Wand 23 kann vorteilhafterweise einen eingeschlossenen Konuswinkel in Bezug auf eine waagerechte Ebene, wie gezeigt, von etwa 33° aufweisen, wobei dieser Winkel ohne weiteres im Bereich von 20° bis 45° gewählt werden kann und auch diese Werte nicht als beschränkend zu betrachten sind. Die Ringvertiefung 20 ist auch nicht zwingend erforderlich sondern könnte auch durch eine senkrecht zur mittleren Längsachse 30 stehende Fläche, die auch eine Anlagefläche 24 bildet, ersetzt werden.

Radial innerhalb der konusförmigen Wand 23 weist die Ringvertiefung 20 in diesem Beispiel eine zumindest im Halbquerschnitt gekrümmte ringförmige Bodenfläche 26 auf, die in die radial äußere Fläche des Zylinderabschnitts 21 übergeht. In diesem Beispiel schließt die im radialen Halbquerschnitt gekrümmte Bodenfläche 26 einen flachen Abschnitt 28 ein, der im Wesentlichen senkrecht zu der mittleren Längsachse 30 des Elements 12 steht. Es wäre aber denkbar, die flache Bodenfläche wegzulassen oder die radiale Breite des flachen Abschnitts 28 auszudehnen, so dass er direkt oder über einen relativ kleinen Radius in die konusförmige Wand 23 bzw. in den Zylinderabschnitt 21 oberhalb des Nietabschnitts 22 übergeht (nicht gezeigt). Auch könnte die Bodenfläche anders realisiert werden bzw. durch einen relativ scharfen Übergang der konusförmigen Wand in den Zylinderabschnitt 21 oberhalb des Nietabschnitts 22 (wobei die Bezeichnung "oberhalb" für die gezeigte Orientierung des Elements 12 in Fig. 1B und nicht als geometrische Definition zu verstehen ist). Mindestens ein lokales Verdrehsicherungsmerkmal 32 und erfindungsgemäß mehrere, gleichmäßig verteilte lokale Verdrehsicherungsmerkmale 32 ist bzw. sind in der konusförmigen Wand 23 der Ringvertiefung 20 und/oder in der wahlweise vorgesehenen ringförmigen Bodenfläche 26 der Ringvertiefung 20 vorgesehen. Ferner erstrecken sich die Verdrehsicherungsmerkmale 32 in diesem Beispiel über die ringfömige Anlagefläche 24 hinaus und unterteilen diese in die genannten Sektoren bzw. Kreisringsegmente 24'.

Jedes Verdrehsicherungsmerkmal 32 besteht in dieser Ausführungsform aus einer in einer Blechanlagefläche des Funktionselements 12 vorgesehenen Vertiefung 31 mit einer zumindest im Wesentlichen mittig in der Vertiefung angeordneten oder mit einer die Vertiefung umgebenden Erhöhung 33.

Dadurch, dass eine lokale Erhöhung 33 und eine lokale Verteifung 31 unmittelbar zueinander benachbart angeordnet sind, muss bei der Anbringung des Elements an ein Blechteil 10 die lokale Erhöhung 33 das Blechmaterial nur über einen kurzen Weg verdrängen, um es in die unmittelbar benachbarte lokale Vertiefung 33 zu bringen und dies gelingt recht einfach und mit mäßigen Kräften auch dann, wenn mit dicken Blechteilen von mehreren mm Dicke oder mit höherfesten oder mit hochfesten Blechen mit Festigkeiten oberhalb von 300MPa bzw. 1400MPa gearbeitet wird.

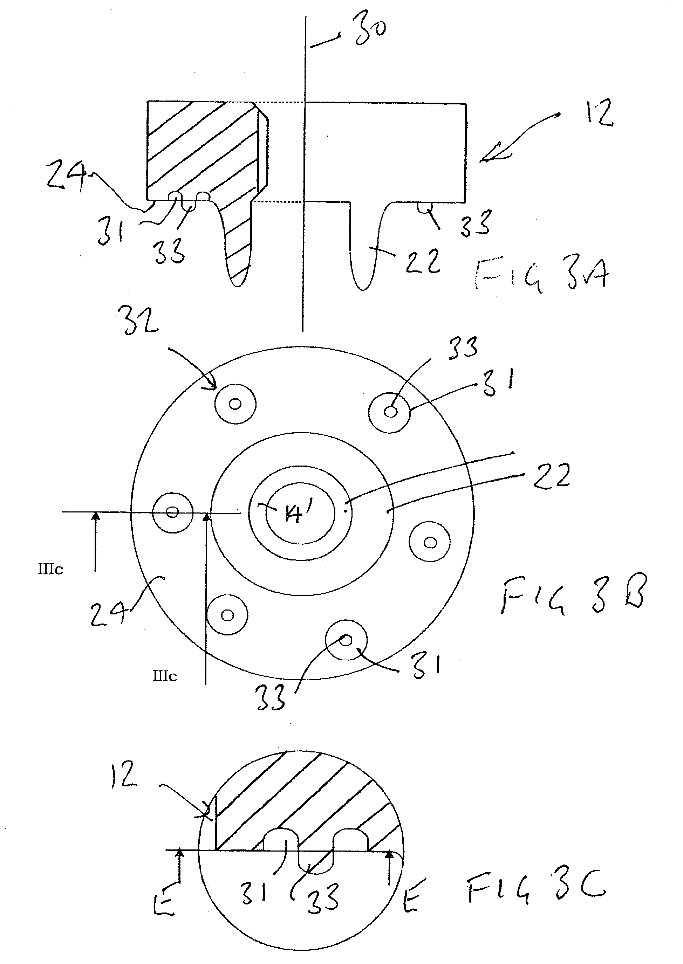

Besonders günstig ist es, dass erfindungsgemäß die Blechanlagefläche (hier durch die Flächen 26, 23 und 24 gebildet) im Bereich des Verdrehsicherungsmerkmals und um diese herum in einer lokalen Ebene E (Fig. 3C) liegt oder eine entsprechende Ebene bestimmt und das Volumen der Erhöhung 33 oberhalb dieser lokalen Ebene zumindest im Wesentlichen dem Volumen der Vertiefung 31 unterhalb dieser Ebene entspricht.

Hierdurch wird sichergestellt, dass das Blechmaterial, das durch die Verdrehsicherungserhöhung 32 lokal verdrängt wird, auch vollständig in die unmittelbar benachbarte Verdrehsicherungsvertiefung 31 aufgenommen wird, wodurch der erwünschte formschlüssige Eingriff zwischen den Verdrehsicherungsmerkmalen 32 und dem Blechteil 10 und daher eine gute Verdrehsicherheit zustande kommt.

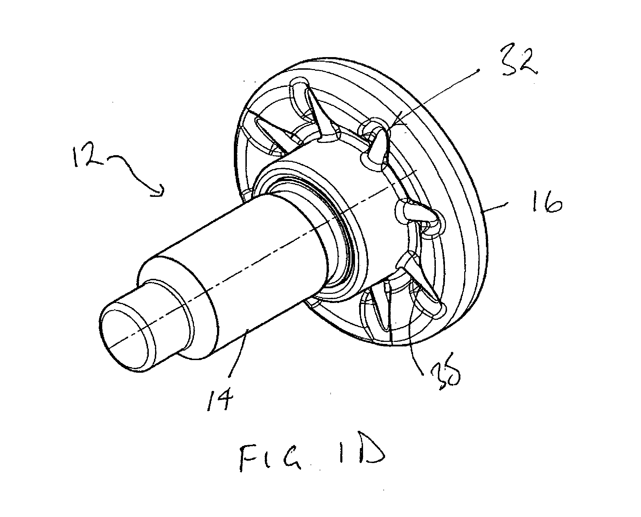

Dabei ist die Spitze 35 der Erhöhung 33 gerundet, wie in den Fig. 1A und 1D gezeigt. Hierdurch wird sichergestellt, dass keine unerwünschte Kerbwirkung im Blechmaterial 10 entsteht, die für die Ermüdungsdauer des Zusammenbauteils abträglich wäre. Aus dem gleichen Grund ist es bevorzugt, wenn die Umrandung 37 der Vertiefung 31 gerundet ist, wie ebenfalls in der Fig. 1A ersichtlich ist. Hier ist aber die Kerbwirkung nicht so kritisch, da das Blechteil 10 nach der Anbringung des Funktionselements, die noch im Detail zu beschreiben ist, an dieser Stelle zumindest im Wesentlichen die ursprüngliche Dicke aufweist, so dass die genannte Umrandung auch scharfkantig ausgeführt werden kann.

Die bzw. jede lokale Vertiefung 31 weist eine längliche, gerundete Form auf, wobei die Übergänge von den Seitenwänden der bzw. jeder lokalen Vertiefung 31, d.h. die Umrandung jeder Vertiefung 31, in diesem Beispiel gerundet ist, wie bei 37 gezeigt.

Die bzw. jede lokale Vertiefung 31 ist in diesem Beispiel so lang ausgeführt, dass sie sich in die ringförmige Anlagefläche 24 hineinerstreckt, wodurch die ringförmigen Auflagefläche 24 durch die länglichen Vertiefungen in Kreisringsegmente 24' aufgeteilt ist. Die Bezeichnung "ringförmige Anlagefläche" ist daher so zu verstehen, dass sie auch eine aus Kreisringsegmenten zusammengesetzte Auflagefläche abdeckt, die durch solche lokale Vertiefungen unterbrochen ist. Es ist allerdings auch möglich, die lokalen Vertiefungen kürzer zu machen, so dass sie die Auflagefläche 24 nicht erreichen und diese nicht unterteilen.

Genauso, wie sie die ringförmige Auflagefläche 24 in diesem Beispiel unterteilen, unterteilen die lokalen länglichen Vertiefungen 31 auch die Bodenfläche 26 der Ringvertiefung 23. Wenn diese Bodenfläche 26 als ringförmig bezeichnet wird, so versteht sich, dass diese auch eine Bodenfläche umfasst, die eine durch eine lokale Vertiefung oder mehrere lokale Vertiefungen unterbrochene Bodenfläche umfasst. Auch die Erhöhungen 33 der einzelnen Verdrehsicherungsmerkmale sind in diesem Beispiel länglich und haben die Form von Verdrehsicherungsrippen. Sie sind an ihren radial inneren Enden an dem zylindrischen Teil 21 des Kopfteils 16 angesetzt, so dass dort die entsprechende Vertiefung 31 nur auf beiden Seiten der Erhöhung vorliegt und sozusagen hufeisenförmig die Erhöhung umfasst, wobei das radial äußere Ende der Rippe bzw. der Erhöhung 311 und das radial äußere Ende der Vertiefung 33 gerundet ausgeführt sind.

In diesem Beispiel sind acht gleichmäßig verteilte Verdrehsicherungsmerkmale 32 vorgesehen. Es kann aber durchaus eine andere Anzahl von Verdrehsicherungsmerkmalen 32 vorgesehen werden - von einem lokalen Verdrehsicherungsmerkmal bis zu zwölf lokalen Verdrehsicherungsmerkmalen wären durchaus denkbar - und auch eine größere Anzahl käme eventuell in Frage, vor allem dann, wenn sie kleiner bzw. schmaler und weniger tief ausgeführt werden.

Wie aus den Zeichnungen, insbesondere der Fig. 1C, ersichtlich, ist das freie Ende 34 der Wandung des rohrförmigen Nietabschnitts in einer radialen Schnittebene gesehen (wie auf der linken Seite in Fig. 1B gezeigt), sowohl auf der radial äußeren Seite als auch auf der radial inneren Seite gerundet und weist beispielsweise eine halbkreisförmige oder pfeilspitzartige Form auf, wodurch ein Ringscheitel am unteren Ende des Nietabschnitts genau an der Stelle, die mit 34 gekennzeichnet ist, entsteht.

In der Ausführung gemäß Fig. 1A-1D ist der Schaftteil 14 unterhalb bzw. innerhalb des Nietabschnitts 22 als massives oder rohrförmiges Zentrierteil ausgebildet. Anstatt das Element als reines Zentrierelement auszubilden, kann es als Zentrier- und Befestigungselement oder als reines Bolzenelement ausgebildet werden. Bei der Ausführung gemäß Fig. 1A bis 1D ist der Schaftteil 14 mit einem Gewinde 14' versehen.

Das Gewinde 14' weist im Anschluss an den Bereich des freien Endes des rohrförmigen Nietabschnitts einen Gewindeauslauf 14" auf, der in einen zylindrischen Abschnitt 40 übergeht mit einem Durchmesser, der gegenüber dem Außendurchmesser des Gewindes gleich groß oder größer ist. Dieser zylindrische Abschnitt 40, der den eigentlichen Zentrierabschnitt bildet, kommt im Wesentlichen erst dann zum Vorschein, wenn das Element 12 an ein Blechteil 10 angebracht ist, wie in Fig. 2C gezeigt. Bei der Ausführung gemäß Fig. 1A bis 1D bzw. Fig. 2C bildet entweder der gesamte Schaftteil 14 unterhalb des umgelegten Nietabschnitts, d.h. des Nietbördels 42, des Zentrierabschnitts 40 oder aber nur der Teil unmittelbar unterhalb des Nietbördels 42, wobei der restliche Teil gegebenenfalls abgesetzt oder gefasst sein kann, d.h. mit einem kleineren Durchmesser zum Vorzentrieren, ausgeführt werden kann.

Es bestehen verschiedene Möglichkeiten, die Elemente gemäß Fig. 1A bis 1D abzuwandeln. Beispielsweise kann der Kopfteil 14 auf der dem Schaftteil entgegengesetzten Seite einen Funktionsabschnitt, beispielsweise in Form eines Außengewindes, eines Innengewindes, eines weiteren Schaftteils mit Clipaufnahme oder eines Führungsteils, aufweisen. Als weitere Alternative könnte der Schaftteil 14 hohl ausgeführt werden und entweder als Führung für einen Stift oder eine Welle dienen oder mit einem Innengewinde ausgeführt werden und somit ein Mutterelement bilden.

Das Verfahren zur Anbringung des Elements 12 der Fig. 1A bis 1D an ein Blechteil 10 wird nunmehr anhand der Fig. 2A bis 2C beschrieben.

Wie in Fig. 2A gezeigt, wird das Blechteil in der Form eines vorgelochten Blechteils 10 eingesetzt, das im Bereich der Lochung 50 zu einem Ringkragen, d.h. zu einer Erhebung 52 vorgeformt ist, die zumindest im Wesentlichen der Form der konusförmigen Wand 23 der Ringvertiefung 20 angepasst ist. In diesem Beispiel ist die Erhebung 52 des Blechteils oben nicht abgeflacht, und das Loch 50 wurde vor der Ausbildung der Erhebung durch einen Stanzvorgang erzeugt, weshalb die Seitenwand 53 des Lochs 50 schräg zur Längsachse 30 verläuft, d.h. in Fig. 2A nach oben divergiert. Der Ringkragen 52 kann oben abgeflacht sein, d.h. die konusförmige Erhebung 52 könnte ohne weiteres oben mit einer Abflachung ausgebildet werden. Die Stanzung des Loches 50 könnte dann am Ende des Pressvorgangs zur Ausbildung des Loches 50 mit Abflachung kombiniert werden, wodurch die Lochwand parallel zur Längsachse 30 verlaufen würde. Als weitere Alternative kann die Erhebung eine steilere Konusform als die der konusförmigen Wand 23 der Ringvertiefung 20 aufweisen.

Die Anbringung des Elements an das Blechteil 10 erfolgt dann in an sich bekannter Weise mittels einer Matrize in einer Presse oder in einem C-Gestell.

Dabei wird beispielsweise in Pfeilrichtung 60 auf den Kopfteil 16 des Elements gedrückt, während das Blechteil 10 auf eine nicht gezeigte Matrize abgestützt wird. Die Fig. 2B zeigt einen Zwischenzustand der Anbringung des Funktionselements an das Blechteil kurz nach der Durchführung des freien Endes des Schaftteils 14 durch das Loch 50, während die Fig. 2C den Endzustand zeigt, in dem das entsprechende Zusammenbauteil bestehend aus dem Funktionselement 12 und dem Blechteil 10 fertiggestellt ist. Dabei wird mittels einer Matrize (nicht gezeigt), die unterhalb des Blechteils angeordnet ist, die Vernietung des Funktionselementes 12 mit dem Blechteil vorgenommen. Zu diesem Zweck weist die Matrize einen mittleren Ausschnitt bzw. eine mittlere Bohrung auf, der bzw. die den Schaftteil aufnimmt, und eine ringförmige den Ausschnitt bzw. die Bohrung umgebende Erhebung aufweist, das Blechmaterial um den Nietabschnitt 22 herum gegen die Verdrehsicherungsmerkmale 32 drückt, wodurch die Erhöhungen 33 in das Blechmaterial eingedrückt werden und das verdrängte Material in die entsprechenden Vertiefungen 31 einfließt.

Der Nietabschnitt 22 wird bei der Ausbildung des Nietbördels 42 (Fig. 2C) in die in der Unterseite des Blechteils 10 gleichzeitig ausgebildete Ringvertiefung 54 eingelegt.

Zu diesem Zweck ist die ringförmige Erhebung der Matrize an ihrem freien Ende vorzugsweise mit einer Ringkante ausgebildet, die in eine radial auβerhalb der Ringkante gelegene gerundete Umformfläche übergeht. Der Durchmesser der Ringkante ist etwas kleiner gewählt als der Durchmesser des Ringscheitels am freien Ende des Nietabschnitts 22, wodurch während des Nietvorgangs der Nietabschnitt 22 durch die Ringkante und die gerundete Umformfläche radial nach außen umgelenkt und zu dem Nietbördel 42 umgeformt wird. Dabei wird das Blechmaterial durch die zwischen dem Kopfteil 16 des Elements 12 und der Matrize ausgeübten Kräfte von dem sich ausbildenden Nietbördel und dem Bereich der Matrize radial außerhalb des Nietbördels 42 so verquetscht, dass das Blechmaterial unter der Einwirkung der Spannung im Bereich der Erhöhungen 33 in die lokalen Vertiefungen 31 fließt. Somit bilden sich im Blechmaterial Vertiefungen an den Stellen der Erhöhungen 33 und Vorsprünge an den Stellen der Verteifungen 31, die eine die Verdrehsicherung schaffende Verzahnung zwischen dem Element 12 und dem Blechteil 10 bilden. Durch die Umbördelung des Nietabschnitts wird das Blechmaterial außerdem in eine zwischen der Ringvertiefung 20 und dem Nietbördel 42 ausgebildete radiale Nut 56 eingeklemmt, welche das Element in axialer Richtung im Blechteil 56sichert. Durch die Quetschkräfte (und die gleichzeitig eintretende Dehnung des Nietabschnitts 22) wird das Blechmaterial außerdem fest gegen den Schaftteil 14 des Elements 12im Bereich oberhalb des Nietbördels 42 gepresst, wodurch eine hohe Lochlaibung entsteht, die eine feste Positionierung des Elements und einen erhöhten Verdrehsicherungswiderstand erzeugt. Außerdem wird das Blechmaterial in Kompression gesetzt, so dass im dynamischen Betrieb keine Ermüdungsrisse zu befürchten sind. Diese Wirkung kann noch gesteigert werden, wenn die konusförmige Blechanstellung teilweise flach gepresst wird, d.h. wenn das Klemmlochnietverfahren gemäß dem eingangs genannten EP-A-0 539 793 angewendet wird.

Das Ergebnis des Verfahrens ist somit ein Zusammenbauteil bestehend aus dem Blechteil 10 und dem daran angebrachten Element 12, wobei das Blechteil 10 im Bereich der Ringvertiefung 20 eine ringförmige Erhebung 52' aufweist, die in die Ringvertiefung 20 formangepasst aufgenommen ist, und das Material des Blechteils greift ebenfalls formangepasst in jedes der jeweils durch eine Erhöhung 33 und eine Vertiefung 31 gebildete Verdrehsicherungsmerkmal 32 ein. Ferner liegt auf der der Ringvertiefung 20 abgewandten Seite 58 des Blechteils 10 die Ringvertiefung 54 vor, in der der zu einem Nietbördel 42 umgebördelte Nietabschnitt 22 angeordnet ist. Die dem Kopfteil 16 abgewandte Seite des Nietbördels 42 steht zumindest im Wesentlichen nicht über die Seite 58 des Blechteils 50 im Bereich um den Nietbördel 42 herum vor und ist vorzugsweise gegenüber diesem geringfügig zurückversetzt, beispielsweise um 0,02 mm.

Der Vollständigkeit halber soll darauf hingewiesen werden, dass das erfindungsgemäße Element 12 nicht zwangsläufig eine Zentrierfunktion erfüllen muss, sondern es kann eine reine Befestigungsfunktion oder Lagerfunktion haben und muss daher nicht ein Zentrierelement bzw. Zentrierbolzen sein.

Die Fig. 3A bis 3C zeigen ein nicht erfindungsgemäßes Funktionselement 12 in Form eines Mutterelements, bei dem die Blechanlagefläche 20 in einer Ebene senkrecht zur mittleren Längsachse 30 steht. In diesem Beispiel werden für die einzelnen Merkmale des Mutterelements die gleichen Bezugsziffern verwendet wie für die bisherige Ausführungsform. Es versteht sich, dass die bisherige Beschreibung der einzelnen Merkmale bzw. ihre Funktion auch für die entsprechenden Merkmale der Fig. 3A bis 3C gilt, es sei denn, etwas Gegenteiliges wird gesagt.

In diesem Beispiel sind sechs gleichmäßig um die mittlere Längsachse verteilte Verdrehsicherungsmerkmale 32 vorgesehen, wobei sowohl die Erhöhung 33 wie auch die dazu konzentrisch angeordnete Vertiefung 31 in Draufsicht kreisrund bzw. kreisförmig sind.

Bei allen Ausführungsformen können als Beispiel für den Werkstoff des Elements alle Materialien genannt werden, die im Rahmen der Kaltverformung die Festigungswerte der Klasse 8 gemäß ISO-Standard oder höher erreichen, beispielsweise eine 35B2-Legierung. Die so gebildeten Befestigungselemente 12 eignen sich u.a. für alle handelsüblichen Stahlwerkstoffe für ziehfähige Blechteile wie auch für Aluminium oder dessen Legierungen. Auch können Aluminiumlegierungen, insbesondere solche mit hoher Festigkeit, für die Elemente benutzt werden, z.B. AlMg5. Auch kommen Elemente 12 aus höherfesten Magnesiumlegierungen, wie beispielsweise AM50, in Frage.

## Patentansprüche

1. Funktionselement (12) mit einem Schafteil (14) und einem Kopfteil (16) sowie mit mehreren gleichmäßig verteilten Verdrehsicherungsmerkmalen (32), die im Bereich einer Blechanlagefläche (20, 24) des Funktionselements (12) vorgesehen sind, die den
Schaftteil umgibt, wobei jedes Verdrehsicherungsmerkmal (32) aus einer in der Blechanlagefläche (20, 24) des Funktionselements (12) vorgesehenen Vertiefung (31) mit einer Umrandung (37) und einer zumindest im Wesentlichen mittig in der Vertiefung (31) angeordneten Erhöhung (33) oder mit einer die Vertiefung (31) umgebenden Erhöhung (33) besteht, **dadurch gekennzeichnet, dass** die Spitze der Erhöhung gerundet ist, dass die Blechanlagefläche (20, 24) im Bereich des Verdrehsicherungsmerkmals (32) und um dieses herum in einer lokalen Ebene (E) liegt oder eine entsprechende Ebene bestimmt, und dass das Volumen der Erhöhung (33) auf einer Seite dieser lokalen Ebene (E) zumindest im Wesentlichen dem Volumen der Vertiefung (31) auf der anderen Seite dieser Ebene (E) entspricht.

2. Funktionselement (12) nach Anspruch 1, **dadurch gekennzeichnet, dass** die Umrandung (37) der Vertiefung (33) gerundet oder scharfkantig ausgeführt ist.

3. Funktionselement (12) nach Anspruch 1 oder 2, **dadurch gekennzeichnet, dass** die Erhöhung (31) die Form einer länglichen Rippe aufweist und mittig in der ebenfalls länglichen Vertiefung (31) angeordnet ist, wodurch diese in zwei Teilbereiche auf beiden Seiten der rippenförmigen Erhöhung aufgeteilt ist.

4. Funktionselement (12) nach Anspruch 3, **dadurch gekennzeichnet, dass** die rippenförmige Erhöhung (33) zumindest im Wesentlichen radial zur mittleren Längsachse (30) steht und von einem zylindrischen Bereich (21) des Funktionselements (12) ausgeht.

5. Funktionselement (12) nach einem der vorhergehenden Ansprüche 1 bis 4, **dadurch gekennzeichnet, dass** die Erhöhung (33) im Querschnitt kreisrund ist und dass die Vertiefung (31) um die Erhöhung (33) herum angeordnet ist, in Draufsicht kreisringförmig ist und koaxial zur Erhöhung (33) steht.

6. Funktionselement (12) nach einem der vorhergehenden Ansprüche, **dadurch gekennzeichnet, dass** das Funktionselement einen Nietabschnitt (22) aufweist, der den formschlüssigen Eingriff jedes Verdrehsicherungsmerkmals (32) des Funktionselements (12) mit einem Blechteil (10) sichert.

7. Funktionselement (12) nach einem der vorhergehenden Ansprüche, **dadurch gekennzeichnet, dass** das Funktionselement ein Einpresselement mit einer Blechmaterial aufnehmenden Hinterschneidung ist, die den formschlüssigen Eingriff jedes Verdrehsicherungsmerkmals des Funktionselements im Blechteil sichert.

8. Zusammenbauteil bestehend aus einem Funktionselement (12) nach einem der vorhergehenden Ansprüche und einem Blechteil (10), wobei das Blechmaterial benachbart zur Blechanlagefläche (20, 24) an der Stelle jeder Erhöhung (33) eines Verdrehsicherungsmerkmals (32) eine Materialvertiefung und an der Stelle jeder Vertiefung (31) eine Materialerhöhung aufweist, wodurch ein die Verdrehsicherung bewirkender formschlüssiger Eingriff zwischen dem Material des Blechteils und dem Funktionselement entsteht.

9. Zusammenbauteil nach dem vorhergehenden Anspruch 8,
**dadurch gekennzeichnet, dass**, wenn es sich bei dem Funktionselement (12) um ein Nietelement mit einem Nietabschnitt (22) handelt, dieser nach der Umbördelung das Blechmaterial zwischen sich und der Blechanlagefläche (20, 24) klemmt.

10. Zusammenbauteil nach Anspruch 8, **dadurch gekennzeichnet, dass**, wenn es sich bei dem Funktionselement um ein Einpresselement handelt, dieses eine Hinterschneidung aufweist und das Blechmaterial in der Hinterschneidung zumindest teilweise aufgenommen ist und somit eine axiale Trennung des Funktionselements und des Blechteils verhindert.

## Claims

1. A functional element (12) having a shaft part (14) and a head part (16) and also having a plurality of features (32) providing security against rotation which are distributed evenly and which are provided in the region of a sheet metal contact surface (20, 24) of the functional element (12), the sheet metal contact surface surrounding the shaft part, wherein each feature (32) providing security against rotation comprises a recess (31) provided in the sheet metal contact surface (20, 24) of the functional element (12) and having a border (37) and a raised portion (33) arranged at least substantially centrally in the recess (31) or having a raised portion (33) surrounding the recess (31), **characterized in that** that the tip of the raised portion (33) is rounded; **in that** the sheet metal contact surface (20, 24) lies in the region of the feature (32) providing security against rotation and around this feature in a local plane (E) or determines a corresponding plane; and **in that** the volume of the raised portion (33) on one side of this local plane (E) corresponds at least substantially to the volume of the recess (31) at the other side of this plane (E).

2. A functional element (12) in accordance with claim 1, **characterized in that** the border (37) of the recess (31) is rounded or sharp-edged.

3. A functional element (12) in accordance with claim 1 or claim 2, **characterized in that in that** the raised portion (31) has the form of an elongate rib and is arranged centrally in the likewise elongate recess (31), whereby this recess is divided into two part regions on both sides of the rib-like raised portion.

4. A functional element (12) in accordance with claim 3, **characterized in that** the rib-like raised portion (33) stands at least substantially radial to the central longitudinal axis (30) and starts from a cylindrical region (21) of the functional element (12).

5. A functional element (12) in accordance with any one of the preceding claims 1 to 4, **characterized in that** the raised portion (33) is circular in cross-section and that the recess (31) is arranged around the raised portion (33), is of circular cylindrical shape in plan view and stands coaxial to the raised portion (33).

6. A functional element (12) in accordance with any one of the preceding claims, **characterized in that** the functional element has a rivet section (22) which secures the form-fitted engagement of each feature (32) of the functional element (12) providing security against rotation with a sheet metal part (10).

7. A functional element (12) in accordance with any one of the preceding claims, **characterized in that** the functional element is a press-in element having an undercut which receives sheet metal material and which secures the form-fitted engagement of each feature of the functional elements providing security against rotation in the sheet metal part.

8. A component assembly comprising a functional element (12) in accordance with any one of the preceding claims and a sheet metal part (10), wherein the sheet metal material has a material recess adjacent to the sheet metal contact surface (20, 24) at the position of each raised portion (33) of a feature (32) providing security against rotation and a raised material portion at the position of each recess (31), whereby a form-fitted engagement bringing about security against rotation arises between the material of the sheet metal part and the functional element.

9. A component assembly in accordance with the preceding claim 8, **characterized in that**, when the functional element (12) is a rivet element having a rivet section (22), the latter, after being beaded over, clamps the sheet metal material between itself and the sheet metal contact surface (20, 24).

10. A component assembly in accordance with claim 8, **characterized in that**, when the functional element is a press-in element, it has an undercut and the sheet metal material is at least partly received in the undercut and thus prevents an axial separation of the functional element and the sheet metal part.

## Revendications

1. Élément fonctionnel (12) comprenant une partie de tige (14) et une partie de tête (16) ainsi que plusieurs caractéristiques antirotation (32) réparties régulièrement, qui sont prévues dans la région d'une surface d'appui sur tôle (20, 24) de l'élément fonctionnel (12) qui entoure la partie de tige, dans lequel chaque caractéristique antirotation (32) est constituée d'un renfoncement (31) ménagé dans la surface d'appui sur tôle (20, 24) de l'élément fonctionnel (12) avec une bordure (37), et d'un relief (33) agencé au moins sensiblement au milieu dans le renfoncement (31), ou d'un relief (33) qui entoure le renfoncement (31),
**caractérisé en ce que** le sommet du relief est arrondi, **en ce que** la surface d'appui sur tôle (20, 24) est située, dans la région de la caractéristique antirotation (32) et tout autour de celle-ci, dans un plan local (E) ou définit un plan correspondant, et **en ce que** le volume du relief (33) sur un côté de ce plan local (E) correspond au moins sensiblement au volume du renfoncement (31) sur l'autre côté de ce plan (E).

2. Élément fonctionnel (12) selon la revendication 1,
**caractérisé en ce que** la bordure (37) du renfoncement (33) est réalisée arrondie ou avec des arêtes vives.

3. Élément fonctionnel (12) selon la revendication 1 ou 2,
**caractérisé en ce que** la saillie (31) présente la forme d'une nervure allongée et est agencée au milieu dans le renfoncement (31) également allongé, grâce à quoi celui-ci est subdivisé en deux zones partielles des deux côtés du relief en forme de nervure.

4. Élément fonctionnel (12) selon l'une des revendications précédentes 1 à 4,
**caractérisé en ce que** le relief (33) en forme de nervure est situé au moins sensiblement radialement par rapport à l'axe longitudinal médian (30) et part d'une zone cylindrique (21) de l'élément fonctionnel (12).

5. Élément fonctionnel (12) selon l'une des revendications précédentes 1 à 4,
**caractérisé en ce que** le relief (33) a une section transversale circulaire, et **en ce que** le renfoncement (31) est agencé tout autour du relief (33), en présentant une forme circulaire en élévation, et est situé coaxialement par rapport à la saillie (33).

6. Élément fonctionnel (12) selon l'une des revendications précédentes, **caractérisé en ce que** l'élément fonctionnel comprend un tronçon formant rivet (22), qui assure l'engagement à coopération de formes de chaque caractéristique antirotation (32) de l'élément fonctionnel (12) avec une pièce en tôle (10).

7. Élément fonctionnel (12) selon l'une des revendications précédentes, **caractérisé en ce que** l'élément fonctionnel est un élément à enfoncer à la presse avec une contre-dépouille qui reçoit un matériau en tôle et qui assure l'engagement à coopération de formes de chaque caractéristique antirotation de l'élément fonctionnel dans la pièce en tôle.

8. Composant d'assemblage constitué d'un élément fonctionnel (12) selon l'une des revendications précédentes et d'une pièce en tôle (10), tel que le matériau de la tôle présente, au voisinage de la surface d'appui sur tôle (20, 24) un renfoncement de matériau à l'emplacement de chaque relief (33) d'une caractéristique antirotation (32) et un relief de matériau à l'emplacement de chaque renfoncement (31), grâce à quoi il en résulte un engagement à coopération de formes, réalisant la fonction antirotation, entre le matériau de la pièce en tôle et l'élément fonctionnel.

9. Composant d'assemblage selon la revendication précédente 8, **caractérisé en ce que**, lorsque l'élément fonctionnel (12) est un élément formant rivet avec un tronçon de rivetage (22), celui-ci enserre, après le rabattement, le matériau de la tôle entre lui-même et la surface d'appui sur tôle (20, 24).

10. Composant d'assemblage selon la revendication 8,
**caractérisé en ce que** lorsque l'élément fonctionnel est un élément à enfoncer à la presse, celui-ci comporte une contre-dépouille, et le matériau de la tôle est reçu au moins partiellement dans la contre-dépouille et empêche ainsi une séparation axiale de l'élément fonctionnel et de la pièce en tôle.
